# EUROPEAN PATENT APPLICATION

(11) **EP 4 506 503 A1**
(43) Date of publication of application: **12.02.2025**
(21) Application number: 23784587.0
(22) Date of filing: 07.03.2023
(51) Int. Cl.: D06M 15/643, B60R 21/235, C08K 3/36, C08K 5/541, C08L 83/05, C08L 83/07, C09D 7/61, C09D 183/02, C09D 183/05, C09D 183/07

(54) **ADDITION-CURABLE LIQUID SILICONE RUBBER COMPOSITION FOR AIRBAGS, AND AIRBAG**

(30) Priority: 04.04.2022 JP 2022062670
(71) Applicant: SHIN-ETSU CHEMICAL CO., LTD., Tokyo 1000005 (JP)
(72) Inventor: ASHIDA, Ryo, Annaka-shi, Gunma 379-0224 (JP); UBUKATA, Shigeru, Annaka-shi, Gunma 379-0224 (JP); HIRABAYASHI, Satao, Annaka-shi, Gunma 379-0224 (JP)
(74) Representative: Sonnenhauser, Thomas Martin
(86) International application number: PCT/JP2023/008580
(87) International publication number: WO 2023/195294

(57) **Abstract**

The present invention refers to an addition-curable liquid silicone rubber composition for an airbag that includes (A) an organopolysiloxane containing two or more alkenyl groups bonded to a silicon atom per molecule and having a polymerization degree of 50 to 2,000, (B) an organohydrogenpolysiloxane containing two or more hydrosilyl groups per molecule, (C) a silica fine powder having a BET specific surface area of 50 m²/g or more, (D) a catalyst for hydrosilylation reaction, (E) an organosilicon compound containing one or more functional groups selected from the groups consisting of an epoxy group, an isocyanate group, and a (meth)acrylic group, and (F) an organosilicon compound containing six or more alkoxy groups bonded directly to a silicon atom per molecule. By this invention, it is possible to provide an addition-curable liquid silicone rubber composition for an airbag that is excellent in slippage resistance when applied on the base fabric for an airbag and cured, and an airbag.

## Description

### TECHNICAL FIELD

The present invention relates to an addition-curable liquid silicone rubber composition for an airbag and an airbag.

### BACKGROUND ART

Conventionally, a silicone rubber composition for an airbag has been proposed for the purpose of forming rubber coating film on a fiber surface. An airbag having a silicone rubber coating film has excellent in internal pressure retainability and low combustion rate, thus is suitably used as an airbag for vehicles, etc.

Such an addition-curable liquid silicone rubber composition for an airbag includes a combination of a crosslinking agent having a hydrosilyl group at both ends of the molecular chain and a crosslinking agent having a hydrosilyl group in the side chain (Patent Document 1). This addition-curable liquid silicone rubber composition for an airbag is characterized by excellent internal pressure retainability. Further, there is also known a method for manufacturing an addition-curable liquid silicone rubber composition containing a resinous polysiloxane for an airbag by premixing siloxane components with silica, a surface treatment agent, and water (Patent Document 2). By covering the fiber surface with this composition, it is possible to obtain a base fabric for an airbag having an excellent low combustion rate. Furthermore, there discloses an addition-curable liquid silicone rubber composition for an airbag also, which uses an organohydrogenpolysiloxane containing T units or Q units as a crosslinking agent (Patent Document 3). A base fabric coated with this composition is characterized by excellent strength. There discloses an addition-curable liquid silicone rubber composition for an airbag contains a silicone resin as a flame retardant, which is composed of M, D, and Q units, wherein only D unit having a crosslinkable functional group (Patent Document 4). An airbag coated with this composition is characterized by excellent low combustion rate.

In recent years, in order to save space and reduce weight, the coating amount of an addition-curable liquid silicone rubber composition for an airbag has been reduced. It is desired to develop an addition-curing liquid silicone rubber composition for an airbag that prevents an airbag from bursting by pressure of inflator gas when the airbag deploys even with the reduced coating amount. It is considered that slippage resistance of silicone-coated base fabric is important to prevent an airbag from bursting by the pressure of the inflator gas, but among conventional literatures concerning an addition-curable liquid silicone rubber composition for an airbag, limited literatures refer to the slippage resistance.

### CITATION LIST

### PATENT LITERATURE

Patent Document 1: JP 2013-531695 A
Patent Document 2: JP 2013-209517 A
Patent Document 3: JP 2019-513907 A
Patent Document 4: WO 2018/168315 A1

### SUMMARY OF INVENTION

### TECHNICAL PROBLEM

The present invention has been made in view of the above-described problems. An object of the present invention is to provide an addition-curable liquid silicone rubber composition for an airbag that is excellent in slippage resistance when applied on the base fabric for an airbag and cured, and an airbag.

### SOLUTION TO PROBLEM

To solve the above problems, the present invention provides an addition-curable liquid silicone rubber composition for an airbag comprising:
(A) 100 parts by mass of an organopolysiloxane containing two or more alkenyl groups bonded to a silicon atom per molecule and having a polymerization degree of 50 to 2,000,
(B) an organohydrogenpolysiloxane containing two or more hydrosilyl groups per molecule in such an amount that the hydrosilyl groups contained in the composition is 1 to 10 moles per 1 mole of the total alkenyl groups bonded to a silicon atom contained in the composition,
(C) 1 to 30 parts by mass of a silica fine powder having a BET specific surface area of 50 m²/g or more,
(D) a catalyst for hydrosilylation reaction, in an amount of 1 to 500 ppm, in terms of the mass of the catalyst metal element, relative to the blending mass of the component (A),
(E) 0.1 to 10 parts by mass of an organosilicon compound containing one or more functional groups selected from the groups consisting of an epoxy group, an isocyanate group, and a (meth)acrylic group, and
(F) 0.1 to 6.0 parts by mass of an organosilicon compound containing six or more alkoxy groups bonded directly to a silicon atom per molecule.

The silicone-coated base fabric for an airbag made from such an addition-curable liquid silicone rubber composition for an airbag, is excellent in the slippage resistance.

Further, in the present invention, the component (F) organosilicon compound containing six or more alkoxy groups bonded directly to a silicon atom per molecule is preferably alkoxy silicate that is represented by the following average structure formula (1) and has a weight-average molecular weight of 200 to 8,000, 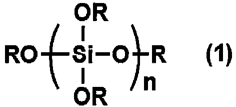 wherein, R independently represents a hydrogen, or a group selected from the group consisting of an alkyl group having 1 to 12 carbon atoms, an alkenyl group having 2 to 12 carbon atoms, and a monovalent aromatic hydrocarbon group having 6 to 12 carbon atoms, and "n" is an integer of 3 to 100.

The silicone-coated base fabric for an airbag made from such an addition-curable liquid silicone rubber composition for an airbag, is more excellent in the slippage resistance.

Further, in the present invention, the addition-curable liquid silicone rubber composition for an airbag preferably further comprises, as a component (G), 0.05 to 5 parts by mass of at least one condensation catalyst selected from the group consisting of an organotitanium compound, an organozirconium compound, and an organoaluminum compound, relative to 100 parts by mass of the component (A).

With such an addition-curable liquid silicone rubber composition for an airbag, silicone rubber layer has more excellent adhesiveness to the base fabric for an airbag.

Further, in the present invention, the addition-curable liquid silicone rubber composition for an airbag further preferably comprises, as a component (H), 0.1 to 100 parts by mass of an organopolysiloxane powder resin having a three-dimensional network structure, relative to 100 parts by mass of the component (A).

The silicone-coated base fabric for an airbag made from such an addition-curable liquid silicone rubber composition for an airbag, is more excellent in flame retardance.

Further, the present invention provides an airbag airbag having cured film of the above addition-curable liquid silicone rubber composition for an airbag on the base fabric for an airbag.

Such an airbag is excellent in slippage resistance.

### ADVANTAGEOUS EFFECTS OF INVENTION

As described above, the present invention can provide an addition-curable liquid silicone rubber composition for an airbag that is excellent in slippage resistance by being applied on base fabric for an airbag and cured, and an airbag.

### DESCRIPTION OF EMBODIMENTS

As described above, it has been desired to develop an addition-curing liquid silicone rubber composition for an airbag that is excellent in slippage resistance when applied on base fabric for an airbag and cured, and an airbag.

As a result of their diligent study of the above problems, the inventors found that an addition-curable liquid silicone rubber composition for an airbag containing an organosilicon compound containing six or more alkoxy groups bonded directly to a silicon atom per molecule exhibits excellent slippage resistance when applied on base fabric for an airbag and cured, and have completed the present invention.

That is, the present invention refers to an addition-curable liquid silicone rubber composition for an airbag comprising:
(A) 100 parts by mass of an organopolysiloxane containing two or more alkenyl groups bonded to a silicon atom per molecule and having a polymerization degree of 50 to 2,000,
(B) an organohydrogenpolysiloxane containing two or more hydrosilyl groups per molecule in such an amount that the hydrosilyl groups contained in the composition is 1 to 10 moles per 1 mole of the total alkenyl groups bonded to a silicon atom contained in the composition,
(C) 1 to 30 parts by mass of a silica fine powder having a BET specific surface area of 50 m²/g or more,
(D) a catalyst for hydrosilylation reaction, in an amount of 1 to 500 ppm, in terms of the mass of the catalyst metal element, relative to the blending mass of the component (A),
(E) 0.1 to 10 parts by mass of an organosilicon compound containing one or more functional groups selected from the groups consisting of an epoxy group, an isocyanate group, and a (meth)acrylic group, and
(F) 0.1 to 6.0 parts by mass of an organosilicon compound containing six or more alkoxy groups bonded directly to a silicon atom per molecule.

Hereinafter, the present invention will be specifically described, but the present invention is not limited thereto. Note that, in the present invention, viscosity is the values measured at 25°C with a rotational viscometer according to the method described in JIS K 7117-1:1999. Further, the weight-average degree of polymerization is the values obtained as a weight-average molecular weight (weight-average degree of polymerization) in terms of polystyrene based on a GPC (gel permeation chromatography) using toluene as a developing solvent under the following conditions.

### [Measurement Conditions]

Eluent: toluene
Flow rate: 0.35 mL/min
Detector: differential refractive index detector (RI)
Column: TSK Guardcolumn Super H-L
TSKgel Super H4000(6.0 mm I.D. × 15 cm × 1)
TSKgel Super H3000(6.0 mm I.D. × 15 cm × 1)
TSKgel Super H2000(6.0 mm I.D. × 15 cm × 2)

### (All columns are made by Tosoh Corporation)

Column temperature: 40°C
Sample injection amount: 10 µL (a toluene solution having a concentration of 0.5 mass%)

### <Addition-curable liquid silicone rubber composition for an airbag>

The inventive addition-curable liquid silicone rubber composition for an airbag comprises:
(A) 100 parts by mass of an organopolysiloxane containing two or more alkenyl groups bonded to a silicon atom per molecule and having a polymerization degree of 50 to 2,000,
(B) an organohydrogenpolysiloxane containing two or more hydrosilyl groups per molecule in such an amount that the hydrosilyl groups contained in the composition is 1 to 10 moles per 1 mole of the total alkenyl groups bonded to a silicon atom contained in the composition,
(C) 1 to 30 parts by mass of a silica fine powder having a BET specific surface area of 50 m²/g or more,
(D) a catalyst for hydrosilylation reaction, in an amount of 1 to 500 ppm, in terms of the mass of the catalyst metal element, relative to the blending mass of the component (A),
(E) 0.1 to 10 parts by mass of an organosilicon compound containing one or more functional groups selected from the groups consisting of an epoxy group, an isocyanate group, and a (meth)acrylic group, and
(F) 0.1 to 6.0 parts by mass of an organosilicon compound containing six or more alkoxy groups bonded directly to a silicon atom per molecule,
and is liquid at room temperature (25°C). Hereinafter, each component will be described in detail.

### [Component (A)]

The component (A) linear organopolysiloxane contains two or more alkenyl groups bonded to a silicon atom per molecule, and is organopolysiloxane having a number-average degree of polymerization of 50 to 2,000. That is, the component (A) is an organopolysiloxane containing two or more alkenyl groups bonded to a silicon atom per molecule and having a polymerization degree of 50 to 2,000, and is a base polymer (main agent) of the inventive addition-curable liquid silicone rubber composition for an airbag.

The component (A) is preferably diorganopolysiloxane having a molecular structure that is a linear and has its main chain basically consisting of repeating of diorganosiloxane units and both ends of the molecular chain blocked with a triorganosiloxy groups. Further, the position of the silicon atoms to which alkenyl groups bond in the molecule of the component (A) linear organopolysiloxane may be located either at the ends of the molecular chain (that is, a triorganosiloxy group) or in the middle of the molecular chain (that is, a bifunctional diorganosiloxane unit located at molecular chain non-terminal), or may be located at both. As the component (A), the particularly preferable is a linear diorganopolysiloxane containing alkenyl groups bonded to a silicon atom at least at both ends of the molecular chain.

The examples of an alkenyl group bonded to a silicon atom in the component (A) include generally those having 2 to 8, preferably 2 to 4 carbon atoms. Specific examples thereof include a vinyl group, an allyl group, a propenyl group, a butenyl group, a pentenyl group, a hexenyl group, a cyclohexenyl group, and a heptenyl group, etc. A vinyl group is particularly preferable.

The number of the alkenyl groups bonded to a silicon atom in the component (A) is characterized to be two or more, preferably 2 to 100, and more preferably 2 to 50.

The examples of the monovalent hydrocarbon group bonded to a silicon atom other than the alkenyl group of the component (A) include generally monovalent hydrocarbon groups having 1 to 12, preferably 1 to 10 carbon atoms. Specific examples of the monovalent hydrocarbon group include an alkyl group such as a methyl group, an ethyl group, a propyl group, a butyl group, a pentyl group, a hexyl group, a cyclohexyl group, and a heptyl group; an aryl group such as a phenyl group, a tolyl group, a xylyl group, and a naphthyl group; an aralkyl group such as a benzyl group and a phenethyl group; a halogen-substituted alky group such as a chloromethyl group, a 3-chloropropyl group, and a 3,3,3-trifluoropropyl group. In particular, a methyl group is preferable.

The polymerization degree (weight-average polymerization degree) of the component (A) is 50 to 2,000, preferably 100 to 1,500, and more preferably 120 to 1,000. When the number-average degree of polymerization is less than 50, the obtained addition-curable liquid silicone rubber composition for an airbag may have poor mechanical properties. Further, when the polymerization degree is more than 2,000, the viscosity of the obtained addition-curable liquid silicone rubber composition for an airbag may become high to result in poor coating workability.

The viscosity of component (A) at 25°C is preferably 50 to 200,000 mPa·s, more preferably 100 to 150,000 mPa·s, and further preferably 400 to 100,000 mPa·s. When the viscosity of component (A) is 50 mPa·s or more, the mechanical properties of the obtained addition-curable liquid silicone rubber composition for an airbag is preferable, and when it is 200,000 mPa·s or less, the viscosity of the obtained addition-curable liquid silicone rubber composition for an airbag will not be high, and coating workability will be favorable also.

Specific examples of the component (A) organopolysiloxane include a dimethyl siloxane/methyl vinyl siloxane copolymer with both molecular chain ends blocked with trimethylsiloxy groups, methyl vinyl polysiloxane with both molecular chain ends blocked with trimethylsiloxy groups, a dimethyl siloxane/methyl vinyl siloxane/methyl phenyl siloxane copolymer with both molecular chain ends blocked with trimethylsiloxy groups, dimethylpolysiloxane with both molecular chain ends blocked with dimethyl vinyl siloxy groups, methyl vinyl polysiloxane with both molecular chain ends blocked with dimethyl vinyl siloxy groups, a dimethyl siloxane/methyl vinyl siloxane copolymer with both molecular chain ends blocked with dimethyl vinyl siloxy groups, a dimethyl siloxane/methyl vinyl siloxane/methyl phenyl siloxane copolymer with both molecular chain ends blocked with dimethyl vinyl siloxy groups, dimethyl polysiloxane with both molecular chain ends blocked with divinyl methyl siloxy groups, a dimethyl siloxane/methyl vinyl siloxane copolymer with both molecular chain ends blocked with divinyl methyl siloxy groups, dimethyl polysiloxane with both molecular chain ends blocked with trivinylsiloxy groups, a dimethyl siloxane/methyl vinyl siloxane copolymer with both molecular chain ends blocked with trivinylsiloxy groups, and a mixture composed of two or more of these organopolysiloxanes.

One kind of the component (A) organopolysiloxane may be used alone, or two or more kind thereof may be used in combination.

### [Component (B)]

The component (B) organohydrogenpolysiloxane that contains two or more hydrogen atoms bonded to a silicon atom (hydrosilyl groups) in one molecule, that is, an organohydrogenpolysiloxane containing two or more hydrosilyl groups per molecule performs a hydrosilylation addition reaction mainly with alkenyl groups in the component (A), and acts as a crosslinking agent (curing agent).

The molecular structure of the component (B) includes various structures such as linear, cyclic, branched, and three-dimensional network (resin-like). It is necessary to have at least two, preferably three or more hydrogen atoms bonded to a silicon atom (hydrosilyl groups) per molecule. It is desirable that the compound has usually 2 to 300, preferably 3 to 200, and more preferably 3 to 100 hydrosilyl groups, and those in liquid state at 25°C is used. Such a hydrosilyl group may be located either at the ends of the molecular chain or in the middle of the molecular chain, or may be located at both.

The organohydrogenpolysiloxane represented by the following average composition formula (2) may be used.

**R¹ₐH_{b}SiO_{(4-a-b)/2}** (2)

In the formula (2), R¹ independently a monovalent hydrocarbon group having 1 to 10 carbon atoms, "a" represents a positive number between 0.7 and 2.1, "b" represents a positive number between 0.001 and 1.0, and "a+b" falls in a positive number between 0.8 and 3.0.

In the formula (2), R¹ independently represents a monovalent hydrocarbon having 1 to 10 carbon atoms. Examples thereof include alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; an aryl group such as a phenyl group, a tolyl group, a xylyl group, and a naphthyl group; aralkyl groups such as a benzyl group, a phenylethyl group, and a phenylpropyl group; and those obtained by substituting a part or all of hydrogen atoms in these groups with a halogen atom such as fluorine, bromine or chlorine, such as a chloromethyl group, a chloropropyl group, a bromoethyl group, and a trifluoropropyl group. R¹ is preferably an alkyl group or an aryl group, and more preferably a methyl group. Note that, R¹ excludes an aliphatic unsaturated hydrocarbon group such as an alkenyl group. Further, "a" represents a positive number between 0.7 and 2.1, "b" represents a positive number between 0.001 and 1.0, and "a+b" falls in a positive number between 0.8 and 3.0. It is more preferable that "a" represents a positive number between 1.0 and 2.0, "b" represents a positive number between 0.01 and 1.0, and "a+b" falls in a positive number between 1.5 and 2.5.

Examples of such organohydrogenpolysiloxanes of the component (B) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogen cyclopolysiloxane, a methylhydrogensiloxane/dimethylsiloxane cyclic copolymer, methylhydrogenpolysiloxane with both molecular chain ends blocked with trimethylsiloxy groups, a dimethylsiloxane/methylhydrogensiloxane copolymer with both molecular chain ends blocked with trimethylsiloxy groups, a dimethylsiloxane/methylhydrogensiloxane/methylphenylsilo xane copolymer with both molecular chain ends blocked with trimethylsiloxy groups, a dimethylsiloxane/methylhydrogensiloxane/diphenylsiloxane copolymer with both molecular chain ends blocked with trimethylsiloxy groups, methylhydrogenpolysiloxane with both molecular chain ends blocked with dimethylhydrogensiloxy groups, dimethylpolysiloxane with both molecular chain ends blocked with dimethylhydrogensiloxy groups, a dimethylsiloxane/methylhydrogensiloxane copolymer with both molecular chain ends blocked with dimethylhydrogensiloxy groups, a dimethylsiloxane/methylphenylsiloxane copolymer with both molecular chain ends blocked with dimethylhydrogensiloxy groups, a dimethylsiloxane/diphenylsiloxane copolymer with both molecular chain ends blocked with dimethylhydrogensiloxy groups, methylphenylpolysiloxane with both molecular chain ends blocked with dimethylhydrogensiloxy groups, diphenylpolysiloxane with both molecular chain ends blocked with dimethylhydrogensiloxy groups; those above exemplified compounds in which a part or all of methyl groups is substituted with other alkyl groups such as an ethyl group and a propyl group; an organosiloxane copolymer composed of a siloxane unit represented by the formula R¹₃SiO_{1/2}, a siloxane unit represented by the formula R¹₂HSiO_{1/2}, and a siloxane unit represented by the formula SiO_{4/2}; an organosiloxane copolymer composed of a siloxane unit represented by the formula R¹₂HSiO_{1/2} and a siloxane unit represented by the formula SiO_{4/2}; and an organosiloxane copolymer composed of a siloxane unit represented by the formula R¹HSiO_{2/2} and a siloxane unit represented by the formula R¹SiO_{3/2} or HSiO_{3/2}; and a mixture composed of two or more of these organopolysiloxanes.

The blending amount of the component (B) is such that a hydrosilyl group contained in the composition including the component (B) is 1 to 10 moles (or groups) per 1 mole (or 1 group) of the total alkenyl groups bonded to a silicon atom contained in the composition including the component (A). It is preferably such that the hydrosilyl group is 1.2 to 9 moles (or groups), more preferably 1.5 to 8 moles (or groups). When the hydrosilyl group contained in the composition including the component (B) is less than 1 mole relative to 1 mole of the total alkenyl groups bonded to a silicon atom contained in the composition including the component (A), the addition-curable liquid silicone rubber composition for an airbag does not cure sufficiently. Further, when more than 10 moles, a silicone rubber cured product obtained from the addition-curable liquid silicone rubber composition for an airbag may be extremely inferior in heat resistance.

One kind of the component (B) organohydrogenpolysiloxane may be used alone, or two or more kinds thereof may be used in combination.

### [Component (C)]

The component (C) silica fine powder having a BET specific surface area of 50 m²/g or more acts as a reinforcing filler. That is, it imparts the strength to the silicone rubber cured product obtained from the inventive addition-curable liquid silicone rubber composition for an airbag. By using the silica fine powder as a reinforcing filler, it is possible to form a coating film satisfying the strength required for the present invention. Such silica fine powder have the specific surface area of 50 m²/g or more according to BET method, preferably 50 to 400 m²/g, and more preferably 100 to 300 m²/g. When the specific surface area is less than 50 m²/g, it is impossible to impart mechanical strength satisfying as a coating material for an airbag.

Such silica fine powder may be those known to be used conventionally as a reinforcing filler for silicone rubber cured product as long as the specific surface area is within the above range. Examples thereof include aerosol silica (fumed silica) and precipitate silica (wet silica).

As the silica fine powder, it is possible to use silica fine powder the surface of which has been subjected to hydrophobization treatment with a surface treatment agent such as (usually hydrolysable) organic silicon compounds including chlorosilane, alkoxysilane, and organosilazane for example. On that occasion, the silica fine powder may be directly subjected to surface-hydrophobization treatment by a surface treatment agent beforehand in a powder state. Alternatively, the silica fine powder may be added with a surface treatment agent in kneading with silicone oil (e.g. the component (A) organopolysiloxane containing alkenyl groups) to be subjected to surface-hydrophobization treatment.

As a treatment method of the component (C), a known technique may be used for surface treatment. For example, the untreated silica fine powder and a surface treatment agent may be put into a kneading machine sealed at normal pressure or a fluidized bed, and mixed at room temperature (25°C) or under heat treatment (heating) in the presence of inert gas as necessary. In some cases, water or a catalyst (hydrolysis accelerator, etc.) may be used to promote the surface treatment. By drying after kneading, surface-treated silica fine powder can be produced. The blending amount of the surface treatment agent may be an amount calculated from a coating area of the surface treatment agent or more.

Specific examples of the surface treatment agent include: silazanes such as hexamethyldisilazane; silane coupling agents such as methyltrimethoxysilane, ethyltrimethoxysilane, propyltrimethoxysilane, butyl trimethoxysilane, dimethyl dimethoxysilane, diethyl dimethoxysilane, vinyl triethoxysilane, vinyl trimethoxysilane, trimethyl methoxysilane, triethyl methoxysilane, vinyl tris(methoxyethoxy) silane, trimethyl chlorosilane, dimethyl dichlorosilane, divinyl dimethoxysilane, and chloropropyltrimethoxysilane; polymethylsiloxane; organohydrogen polysiloxane; etc. By using these agents for the surface treatment, it is possible to use as hydrophobic silica fine powder. In particular, silane coupling agents or silazanes are preferable as the surface treatment agent.

When the component (C) silica fine powder has been directly surface-hydrophobized in advance in a powder state with a surface treatment agent containing an alkenyl group, the composition containing component (B) contains 1 to 10 moles (or groups), preferably 1.2 to 8 moles (or groups), and more preferably 1.5 to 6 moles (or groups) of hydrosilyl groups per mole of alkenyl groups bonded to a silicon atom contained in the compositions containing the component (A) and the component (C) surface treatment agents.

This is because, when the hydrosilyl groups are less than 1 mole per mole of alkenyl groups bonded to a silicon atom in the addition-curable liquid silicone rubber composition for an airbag, the addition-curable liquid silicone rubber composition for an airbag may not cure sufficiently and may not exhibit sufficient adhesive strength, while when the hydrosilyl groups exceed 10 moles, the heat resistance of the cured silicone rubber obtained from the addition-curable liquid silicone rubber composition for an airbag may get drastically worse.

The blending amount of the component (C) is 1 to 30 parts by mass, preferably 3 to 25 parts by mass, and more preferably 5 to 20 parts by mass relative to 100 parts by mass of the component (A) organopolysiloxane. When the blending amount is less than 1 part by mass, a silicone rubber cured product with sufficient strength cannot be obtained. When the blending amount is more than 30, viscosity of the obtained addition-curable liquid silicone rubber composition for an airbag may become high and have reduced flowability to result in poor coating workability.

One kind of the component (C) fine powder silica may be used alone, or two or more kind thereof may be used in combination.

### [Component (D)]

The component (D) catalyst for hydrosilylation reaction mainly promotes an addition reaction between the alkenyl group bonded to a silicon atom contained in the composition (A) and the hydrosilyl group contained in the composition (B). The catalyst for the hydrosilylation reaction is not particularly limited, and examples thereof include platinum group metals such as platinum, palladium, and rhodium; chloroplatinic acid; alcohol-modified chloroplatinic acid; a coordination compound of chloroplatinic acid with olefins, vinyl siloxanes or acetylene compounds; platinum group metal compounds such as tetrakis(triphenylphosphine)palladium, and chlorotris(triphenylphosphine)rhodium; etc. Platinum group metal compounds are preferable.

The blending amount of the component (D) is 1 to 500 ppm, preferably 5 to 100 ppm relative to the blending mass of the components (A) in terms of mass of catalytic metal element. When the blending amount is less than 1 ppm, it is not preferable because the rate of the addition reaction become very slow or the addition-curable liquid silicone rubber composition for an airbag does not cure. When the blending amount is more than 500 ppm, the heat resistance of the silicone rubber cured product may decline.

One kind of the component (D) catalyst for hydrosilylation reaction may be used alone, or two or more kind thereof may be used in combination.

### [Component (E)]

The component (E) is an organosilicon compound containing one or more functional groups selected from the groups consisting of an epoxy group, an isocyanate group, and a (meth)acrylic group, and is added to allow the addition-curable liquid silicone rubber composition for an airbag to exhibit and enhance adhesiveness to the base fabric for an airbag.

Any organosilicon compound may be used as long as the organosilicon compound meets the above, but is different from the component (F) that will be described later. The component (E) is preferably the organosilicon compound having both of at least one epoxy group and at least one alkoxy group bonded to a silicon atom within one molecule. In view of exhibiting adhesive property, an organosilicon compound having at least one epoxy group and at least one alkoxy group bonded to a silicon atom (e.g., three for trialkoxysilyl groups, two for organodialkoxysilyl groups, etc.). For example, they are organosilane or a cyclic or linear organosiloxane having 2 to 100, preferably 2 to about 50 silicon atoms, and having at least one epoxy groups and at least two alkoxy groups bonded to a silicon atom more preferably.

The epoxy group preferably bonded to a silicon atom in the form of, for example: a glycidoxyalkyl group such as a glycidoxypropyl group; or an epoxy-containing cyclohexylalkyl group such as a 2,3-epoxycyclohexylethyl group and a 3,4-epoxycyclohexylethyl group.

The alkoxy group bonded to a silicon atom is preferably bonded to a silicon atom to form, for example, a trialkoxysilyl group such as a trimethoxysilyl group and a triethoxysilyl group; and an alkyldialkoxysilyl group such as a methyldimethoxysilyl group, an ethyldimethoxysilyl group, a methyldiethoxysilyl group, and an ethyldiethoxysilyl group.

Examples of the component (E) organosilicon compound include: an epoxy group-containing silane coupling agent (that is, epoxy functional group-containing organoalkoxysilane) such as γ-glycidoxypropyltriethoxysilane, γ-glycidoxypropylmethyldiethoxysilane, (3,4-epoxycyclohexylethyl)trimethoxysilane, (3,4-epoxycyclohexylethyl)triethoxysilane, (3,4-epoxycyclohexylethyl)methyldimethoxysilane, (3,4-epoxycyclohexylethyl)methyldiethoxysilane, (2,3-epoxycyclohexylethyl)triethoxysilane, (2,3-epoxycyclohexylethyl)methyldimethoxysilane, and (2,3-epoxycyclohexylethyl)methyldiethoxysilane; a (meth)acryl group-containing silane coupling agent such as 3-acryloxypropyl trimethoxysilane, 3-methacryloxypropyl trimethoxysilane; an isocyanate group-containing silane coupling agent such as 3-isocyanate propyltriethoxysilane, 3-isocyanate propyltrimethoxysilane; an organosilicon compound such as a cyclic organopolysiloxane containing an epoxy group represented by the following chemical formula and a linear organopolysiloxane containing an epoxy group; a mixture of two or more kind thereof; a partially hydrolyzed condensate of one or two or more kinds thereof; etc.

Main examples are shown below.

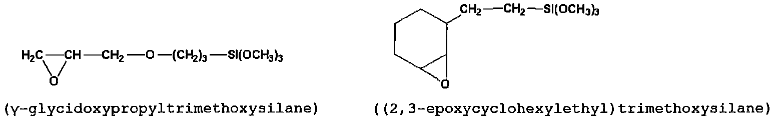

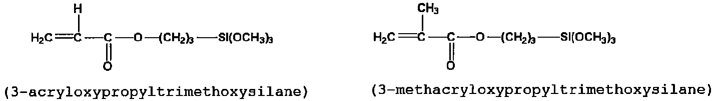

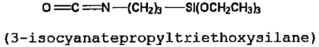

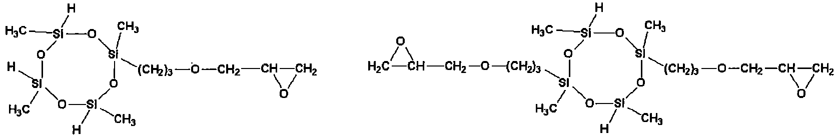

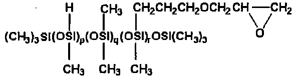

In the formulae, "p" is an integer of 1 to 40, "q" is an integer of 0 to 40, and "r" is an integer of 1 to 40, preferably an integer of 1 to 20.

The blending amount of the component (E) is 0.1 to 10 parts by mass, preferably 0.15 to 5 parts by mass relative to 100 parts by mass of the component (A) organopolysiloxane. When the blending amount is less than 0.1 parts by mass, the obtained addition-curable liquid silicone rubber composition for an airbag may not exhibit sufficient adhesive strength. When the blending amount exceeds 10 parts by mass, the addition-curable liquid silicone rubber composition for an airbag may has high thixotropy and reduced flowability, resulting in worsened workability in coating.

When the component (E) contains an alkenyl group and/or a hydrosilyl group, the hydrosilyl groups contained in the composition containing the components (B) and (E) are totally in the amount of 1 to 10 moles, preferably 1.2 to 8 moles (or groups), more preferably 1.5 to 6 moles (or groups) per 1 mole (or 1 group) of the total alkenyl groups bonded to a silicon atom (or a nitrogen atom) contained in the composition containing the components (A), (C), and (E).

This is because the addition-curable liquid silicone rubber composition for an airbag may not cure sufficiently to fail to exhibit sufficient adhesive strength when the hydrosilyl group is less than 1 mole relative to 1 mole of the alkenyl groups bonded to silicon atoms in the addition-curable liquid silicone rubber composition for an airbag, on the other hand, the heat resistance of the cured silicone rubber product obtained from the addition-curable liquid silicone rubber composition for an airbag may be extremely inferior when the hydrosilyl group exceeds 10 moles.

One kind of the component (E) may be used alone, or two or more kinds thereof may be used in combination.

### [Component (F)]

The component (F) is an organosilicon compound containing six or more alkoxy groups bonded directly to a silicon atom per molecule. By applying an addition-curable liquid silicone rubber composition for an airbag containing this onto the base fabric for an airbag for coating and cured by heating, the adhesion between the threads of the base fabric is strengthened and the component (F) acts as a slippage resistance improver.

The blending amount of component (F) is 0.1 to 6.0 parts by mass, preferably 0.12 to 5.8 parts by mass, relative to 100 parts by mass of the component (A) organopolysiloxane. When the blending amount is outside this range, the addition-curable liquid silicone rubber composition for an airbag will be inferior in the slippage resistance when applied onto base fabric for an airbag and cured.

The component (F) is an organosilicon compound containing six or more alkoxy groups bonded directly to a silicon atom per molecule, and any organosilicon compound can be used as long as the organosilicon compound is different from the component (E), that is, as long as the organosilicon compound does not contain one or more functional groups selected from the groups consisting of an epoxy group, an isocyanate group, and a (meth)acrylic group. However, it is preferably an alkoxy silicate represented by the average structure of the following formula (1) and having a weight-average degree of polymerization of 200 to 8,000. In addition, the upper limit of the alkoxy groups directly bonded to silicon atoms in one molecule is not particularly limited, but may be 200 or less for example.

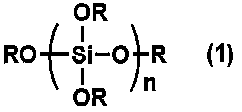

In the above formula, R independently represents a hydrogen atom, or a group delected from the group consisting of an alkyl group having 1 to 12 carbon atoms, an alkenyl group having 2 to 12 carbon atoms, and a monovalent aromatic hydrocarbon group having 6 to 12 carbon atoms, and "n" is an integer of 3 to 100.

When the component (F) is an alkoxy silicate represented by the above formula (1), the weight-average molecular weight is preferably 200 to 8,000, more preferably 250 to 7,000, and further preferably 300 to 6,000. When the weight-average molecular weight is 200 or more, the boiling point of the compound does not become low, the active ingredient does not volatilize during heat curing, and a sufficient effect of improving slippage resistance can be obtained. When the weight-average molecular weight is 8,000 or less, the viscosity of the addition-curable liquid silicone rubber composition for an airbag does not become high, and coating workability does not deteriorate.

Specific examples meet the formula (1) include the following.

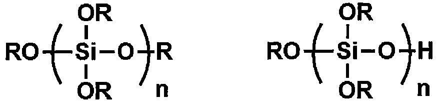

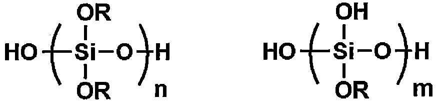

In the above formulae, R independently represents a group selected from the group consisting of an alkyl group having 1 to 12 carbon atoms, an alkenyl group having 2 to 12 carbon atoms, and a monovalent aromatic hydrocarbon group having 6 to 12 carbon atoms, "n" is an integer of 3 to 100, and "m" is an integer of 6 to 100.

Other examples of the component (F) include, in addition to tris-(trimethoxysilylpropyl)isocyanurate, tris-(triethoxysilylpropyl)isocyanurate, bis-(trimethoxysilylpropyl)allyl isocyanurate, bis-(triethoxysilylpropyl)allyl isocyanurate, 1,6-bis(trimethoxysilyl)hexane, 1,6-bis(triethoxysilyl)hexane, 1,8-bis(trimethoxysilyl)octane, and 1,8-bis(triethoxysilyl)octane, organosilicon compounds such as cyclic organopolysiloxanes containing alkoxysilyl groups represented by the following chemical formulae, or linear organopolysiloxanes containing alkoxysilyl groups, mixtures of two or more kinds thereof, partially hydrolyzed condensates of one or more kind thereof, etc.

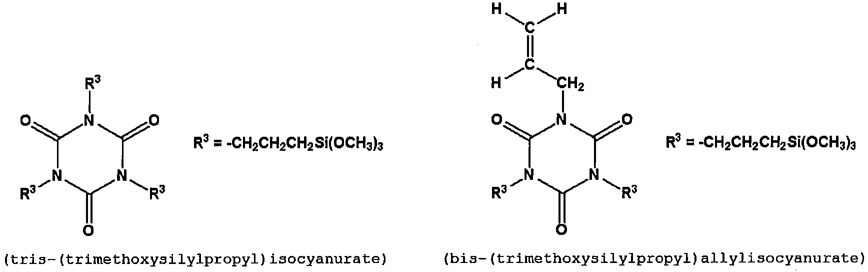

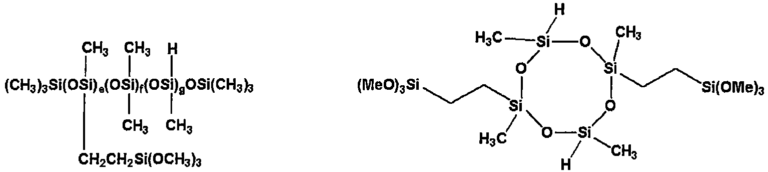

In the above formulae, "e" is an integer of 2 to 40, preferably an integer of 2 to 20, "f" is an integer of 0 to 40, and "g" is an integer of 0 to 40.

One kind of the component (F) may be used alone, or two or more kinds thereof may be used in combination.

### [Other Component]

Any other component, other than the components (A) to (F), can be blending to the inventive addition-curable liquid silicone rubber composition for an airbag according to a purpose. Specific examples thereof include the following. Each kind of these other components may be used alone, or two or more thereof may be used in combination.

### [Component (G)]

The component (G) condensation catalyst is at least one kind selected from the group consisting of an organotitanium compound, an organozirconium compound, and an organoaluminum compound, and acts as a condensation catalyst for the adhesion-imparting functional group of the component (E) in order to promote adhesion.

Specific examples of the component (G) include titanium-based condensation catalysts (titanium compounds) such as organic titanic acid esters including titanium tetraisopropoxide, titanium tetra-n-butoxide, and titanium tetra-2-ethylhexoxide, and an organic titanium chelate compounds including diisopropoxy bis(acetyl acetonate) titanium, diisopropoxy bis(ethyl acetoacetate) titanium, and titanium tetraacetylacetonate; zirconium-based condensation catalysts (zirconium compound) such as organic zirconium esters including zirconium tetra-n-propoxide and zirconium tetra-n-butoxide, and organic zirconium chelate compounds including zirconium tributoxy monoacetylacetonate, zirconium monobutoxy acetylacetonate bis(ethyl acetoacetate), and zirconium tetraacetylacetonate; and aluminum-based condensation catalysts (aluminum compounds) such as organic aluminum acid esters including aluminum secondary butoxide, organic aluminum chelate compounds including aluminum tris acetyl acetonate, aluminum bis-ethylacetoacetate monoacetylacetonate, and aluminum tris-ethylacetoacetate.

The component (G) organotitanium compound, organic zirconium compound, and organic aluminum are optional components blended as necessary. The blending amount thereof is preferably 0.05 to 5 parts by mass, more preferably 0.1 to 2 parts by mass relative to 100 parts by mass of the component (A). When the blending amount is in the range of 0.05 to 5 parts by mass, the cured product obtained from the addition-curable liquid silicone rubber composition for an airbag has excellent adhesion to base fabric for an airbag.

One kind of the component (G) may be used alone, or two or more kinds thereof may be used in combination.

### [Component (H)]

The component (H) is an organopolysiloxane resin characterized by a structure of three-dimensional network (resin-like), that is, an organopolysiloxane powder resin having a three-dimensional network structure. Preferably the resin is basically constituted of at least one branched siloxane unit selected from the group of a trifunctional R⁴SiO_{3/2} unit and a tetrafunctional SiO_{4/2} unit, may optionally contain a monofunctional R⁴₃SiO_{1/2} unit and/or a bifunctional R⁴₂SiO_{2/2} unit as necessary, and acts as a flame retardancy improver. In a molecule, however, this organopolysiloxane resin may contain an alkenyl group, but does not contain a hydrogen atom bonded to a silicon atom (hydrosilyl group). Furthermore, this organopolysiloxane resin has a three-dimensional network (resin-like) structure and is powdery at 25°C, and thus is clearly differentiated from the component (A) that has basically a linear structure and is liquid at 25°C.

R⁴ in the above formulae independently represents monovalent hydrocarbon group having 1 to 10, preferably 1 to 8 carbon atoms, can include the same groups as the alkenyl groups and the monovalent organic groups that is exemplified for the above component (A). Specific examples thereof include: alkenyl groups such as a vinyl group, an allyl group, a propenyl group, a butenyl group, a pentenyl group, a hexenyl group, a cyclohexenyl group, and a heptenyl group; alkyl groups such as a methyl group, an ethyl group, a propyl group, a butyl group, a pentyl group, a hexyl group, a cyclohexyl group, and a heptyl group; aryl groups such as a phenyl group, a tolyl group, a xylyl group, and a naphthyl group; aralkyl groups such as a benzyl group and a phenethyl group; a halogen-substituted alkyl group such as a chloromethyl group, a 3-chloropropyl group, and a 3,3,3-trifluoropropyl group; etc. In particular, a methyl group and a vinyl group are preferable.

The content of the alkenyl group bonded to a silicon atom in the component (H) is preferably 0 to 10 mole%, particularly preferably about 2 to 8 mole% relative to the total substituents bonded to a silicon atom.

The component (H) organopolysiloxane resin preferably contains an R⁴SiO_{3/2} unit and/or an SiO_{4/2} unit, and the total amount thereof is preferably 20 to 75 mole%, particularly preferably 30 to 65 mole% in the organopolysiloxane resin of the component (H).

Here, the component (H) organopolysiloxane resin may optionally contain contains an R⁴₃SiO_{1/2} unit and/or an R⁴₂SiO_{2/2} unit as described above, and the total content thereof is preferably 0 to 70 mole%, and particularly preferably 0 to 50 mole% in the organopolysiloxane resin of the component (H).

It is suitable when the total amount of the R⁴SiO_{3/2} unit and/or the SiO_{4/2} unit is within a range of 20 to 75 mole%, because sufficient flame retardancy improvement effect can be obtained.

Further, the weight-average molecular weight of the component (H) organopolysiloxane resin, in terms of polystyrene based on a GPC (gel permeation chromatography) using toluene as a developing solvent, is preferably in a range of 2,000 to 50,000, and particularly preferably 4,000 to 20,000. When the weight-average molecular weight is in the range of 2,000 to 50,000, sufficient flame retardancy improvement effect can be obtained, and the addition-curable liquid silicone rubber composition for an airbag has a preferable viscosity in terms of workability in coating. Note that, the weight-average molecular weight is a value determined by a GPC analysis under the same conditions as that used for obtaining the polymerization degree of the above component (A).

Specific examples of the component (F) organopolysiloxane resin include: an organosiloxane copolymer composed of a siloxane unit represented by the formula R'₃SiO_{1/2}, a siloxane unit represented by the formula R'₂R"SiO_{1/2}, a siloxane unit represented by the formula R'₂SiO_{2/2}, and a siloxane unit represented by the formula SiO_{4/2}; an organosiloxane copolymer composed of a siloxane unit represented by the formula R'₃SiO_{1/2}, a siloxane unit represented by the formula R'₂R"SiO_{1/2}, and a siloxane unit represented by the formula SiO_{4/2} an organosiloxane copolymer composed of a siloxane unit represented by the formula R'₂R"SiO_{1/2}, a siloxane unit represented by the formula R'₂SiO_{2/2}, and a siloxane unit represented by the formula SiO_{4/2}; an organosiloxane copolymer composed of a siloxane unit represented by the formula R'R"SiO_{2/2}, and a siloxane unit represented by the formula R'SiO_{3/2} or a siloxane unit represented by the formula R"SiO_{3/2}; and a mixture composed of two or more of these organopolysiloxanes.

R' in the above formulae each represents the same or different from each other, unsubstituted or substituted monovalent hydrocarbon group having 1 to 10, preferably 1 to 8 carbon atoms other than the alkenyl group, and examples thereof include: an alkyl group such as a methyl group, an ethyl group, a propyl group, a butyl group, a pentyl group, a hexyl group, a cyclohexyl group, and a heptyl group; an aryl group such as a phenyl group, a tolyl group, a xylyl group, and a naphthyl group; an aralkyl group such as a benzyl group and a phenethyl group; a halogenated alkyl group such as a chloromethyl group, a 3-chloropropyl group, and a 3,3,3-trifluoropropyl group; etc. In particular, a methyl group is preferable. Further, R" in the above formulae is an alkenyl group, and examples thereof include a vinyl group, an allyl group, a butenyl group, a pentenyl group, a hexenyl group, and a heptenyl group. In particular, a vinyl group is preferable.

The blending amount of the component (H) is 0.1 to 100 parts by mass, preferably 1 to 90 parts by mass, and particularly preferably 5 to 80 parts by mass relative to 100 parts by mass of the component (A) organopolysiloxane. When the blending amount is in the range of 1 to 100 parts by mass, sufficient flame retardancy improvement effect can be obtained, and is excellent in the cost-effectiveness.

When the component (H) contains an alkenyl group, the amount thereof is such that the hydrosilyl groups contained in the composition is 1 to 10 moles per 1 mole of the total alkenyl groups bonded to a silicon atom contained in the composition. For example, the amount of the component (H) may be such that the hydrosilyl groups contained in the components (B) and (E) is 1 to 10 moles (or groups), preferably 1.2 to 8 moles (or groups), and more preferably 1.5 to 6 moles (or groups) per 1 mole of the total alkenyl groups bonded to a silicon atom contained in the components (A), (C), (E), and (H) in the composition. This is because, the addition-curable liquid silicone rubber composition for an airbag may not cure sufficiently nor exhibit sufficient adhesive strength when the total amount of the hydrosilyl groups is less than 1 mole per 1 mole of the total alkenyl groups bonded to a silicon atom contained in the composition, and on the other hand because the heat resistance of the cured silicone rubber obtained from the addition-curable liquid silicone rubber composition for an airbag may get drastically worse when the total amount of the hydrosilyl groups exceed 10 moles.

In the present invention, as described above, each component is blended such that the total number of moles of the hydrosilyl groups is 1 to 10 moles relative to 1 mole of the total alkenyl groups contained in the respective components contained in the addition curable liquid silicone rubber composition for airbag.

One kind of the component (H) organopolysiloxane resin having a three-dimensional network structure may be used alone, or two or more kinds of them may be used in combination.

### • Reaction Control Agent

Any known reaction control agent may be used without limitation as long as it has an effect of inhibiting curing to the component (D) catalyst for hydrosilylation reaction. Specific examples thereof include: a phosphorus-containing compound such as triphenyl phosphine; a nitrogen-containing compound such as tributyl amine, tetramethyl ethylenediamine, and benzotriazole; a sulfur-containing compound; an acetylene-based compound such as acetylene alcohols; a compound containing two or more alkenyl groups; a hydroperoxy compound; a maleic acid derivative; etc.

A degree of the curing inhibition effect by the reaction control agent varies depending on a chemical structure of the reaction control agent. Therefore, an adding amount of the reaction control agent is preferably adjusted to an optimum amount for each reaction control agent to be used. By adding an optimum amount of the reaction control agent, the addition-curable liquid silicone rubber composition for an airbag has excellent long term storage stability at room temperature and curability.

### • Non-reinforcing filler

Examples of filler other than the component (C) surface-treated silica fine powder include: a filler such as crystalline silica (for example, quartz powder having a BET specific surface area of less than 50 m²/g), an organic resin hollow filler, polymethyl silsesquioxane fine particles (so-called silicone resin powder), fumed titanium dioxide, magnesium oxide, zinc oxide, iron oxide, aluminum hydroxide, magnesium carbonate, calcium carbonate, zinc carbonate, carbon black, diatomaceous earth, talc, kaolinite, and glass fiber; and a filler obtained by subjecting these fillers to surface-hydrophobization treatment with an organosilicon compound such as an organoalkoxysilane compound, an organochlorosilane compound, an organosilazane compound, and a low-molecular weight siloxane compound; silicone rubber powder; and silicone resin powder; etc.

### • Other components

In addition, for example, it is possible to blend: an organopolysiloxane containing one hydrogen atom bonded to a silicon atom within one molecule and containing no other functional group; an organopolysiloxane containing one alkenyl group bonded to a silicon atom within one molecule and containing no other functional group; a non-functional organopolysiloxane containing no hydrogen atom bonded to a silicon atom, no alkenyl group bonded to a silicon atom, or no other functional group (so-called dimethyl silicone oil); an organic solvent; creep hardening inhibitor; plasticizer; thixotropic agent: pigment; dye; fungicide; etc.

### <Preparation of Addition Curable Liquid Silicone Rubber Composition for an Airbag>

By uniformly mixing components (G) and (H) and the other components to be blended as necessary besides the above components (A) to (F), the addition-curable liquid silicone rubber composition for an airbag can be prepared.

The thus obtained addition curable liquid silicone rubber composition for an airbag is a composition that is liquid at 25°C, and has preferably a viscosity at 25°C of 1 to 500 Pa·s, more preferably 2 to 400 Pa·s, and further preferably 5 to 300 Pa·s. Within the above range of viscosity at 25°C, it is hard to cause coating unevenness when base fabric for an airbag is coated with the composition or insufficient adhesion strength to a base fabric for an airbag after curing, and thus the composition can be suitably used.

### <Base Fabric for Airbag>

As the base fabric for an airbag (base material made of fiber cloth) on which silicone rubber layer is formed, those publically known may be used in general. Specific examples thereof include a woven fabric of various synthetic fibers such as various polyamide fibers including 6,6-nylon, 6-nylon, and aramid fiber, various polyester fibers including polyethylene terephthalate (PET), polybutylene terephthalate (PBT), etc.

### <Airbag>

The inventive airbag have cured film of the addition-curable liquid silicone rubber composition for an airbag on base fabric for an airbag.

### <Method for Manufacturing Airbag>

After the addition-curable liquid silicone rubber composition for an airbag is applied onto one surface or both surfaces of base fabric for an airbag (base material made of fiber cloth), particularly onto one surface of the base cloth, and then silicone rubber layer (cured film) can be formed by heating and curing the composition in a dry furnace or the like. An airbag can be manufactured using the silicone-coated base fabric.

Here, a conventional method can be employed for applying the addition-curable liquid silicone rubber composition for an airbag onto the base fabric for an airbag, but coating by a knife coater is preferable. The thickness of the coating layer (or applying amount onto a surface) may be 5 to 100 g/m² in general, and preferably 8 to 90 g/m², and more preferably 10 to 80 g/m².

The addition-curable liquid silicone rubber composition for an airbag can be cured by a known curing method under known curing conditions. Specifically, for example, the cured film of the above composition can be cured by heating at 100 to 200°C for 1 to 30 minutes.

Methods for processing the thus manufactured base fabric for an airbag (silicone rubber-coated base fabric for an airbag) having a silicone rubber layer on one or both surfaces into an airbag include bonding outer peripheral parts of the two sheets of the above silicone rubber-coated basic fabrics for an airbag each other with an adhesive with the silicone rubber-coated surfaces facing the inner surfaces and then sewing the adhesive layers together. Alternatively, the method may be applying a predetermined amount of the addition-curable liquid silicone rubber composition for an airbag to both outer sides of base fabric for an airbag made by hollow weaving in advance and curing the composition under a predetermined curing condition. A known adhesive may be used as the adhesive used at this time, and a silicone-based adhesive which is called "seam sealant" is suitable in terms of adhesive strength, adhesion durability, etc.

### EXAMPLE

Hereinafter, the present invention will be specifically described by showing Preparation Example, Examples, and Comparative Examples. However, the present invention is not limited to the following Examples.

As the component (A), the following components were used.
(A-1): Linear dimethylpolysiloxane (number of vinyl groups: 2 groups) with both molecular chain ends blocked with vinyl dimethylsiloxy groups, linear dimethylpolysiloxane which has number-average degree of polymerization of 700 and viscosity of 30,000 mPa·s.
(A-2): Linear dimethyl-vinylmethylpolysiloxane (number of vinyl groups: 10 groups) with both molecular chain ends blocked with trimethylsiloxy groups, linear dimethyl-vinylmethylpolysiloxane which has number-average degree of polymerization of 200 and viscosity of 700 mPa·s, wherein bifunctional diorganosiloxane units constituting the main chain contains 5 mol% of vinylmethylsiloxane units and 95 mol% of dimethylsiloxane units.
(A-3): Linear dimethylpolysiloxane (number of vinyl groups: 2 groups) with both molecular chain ends blocked with vinyl dimethylsiloxy groups, linear dimethylpolysiloxane which has number-average degree of polymerization of 540 and viscosity of 10,000 mPa·s.
(A-4): Linear dimethylpolysiloxane (number of vinyl groups: 2 groups) with both molecular chain ends blocked with vinyl dimethylsiloxy groups, linear dimethylpolysiloxane which has number-average degree of polymerization of 450 and viscosity of 5,000 mPa·s.

As the component (B), the following components were used.
(B-1): Linear dimethylsiloxane/methylhydrogensiloxane copolymer (in the above formula (2), "a"=1.33, "b"=0.70, R¹=CH₃, number of hydrosilyl groups: 45 groups) with both molecular chain ends blocked with trimethylsiloxy groups, the copolymer which has number-average degree of polymerization of 64 and viscosity of 45 mPa·s.
(B-2): Linear methylhydrogenpolysiloxane (in the above formula (2), "a"=1.10, "b"=0.95, R¹=CH₃, number of hydrosilyl groups: 38 groups) with both molecular chain ends blocked with trimethylsiloxy groups, the linear methylhydrogenpolysiloxane which has number-average degree of polymerization of 40 and viscosity of 20 mPa·s.

As the component (C), the following component was used.
(C): Silica fine powder (Product name; Aerosil 300, manufactured by Nippon Aerosil Co., Ltd.) having the specific surface area of 300 m²/g in BET method.

As the component (D), the following component was used.
(D): Dimethyl polysiloxane solution containing 1 mass% of chloroplatinic acid/1,3-divinyl tetramethyl disiloxane complex in terms of the platinum atom content

As the component (E), the following component was used.
(E): γ-glycidoxy propyl trimethoxysilane

As the component (F), the following components were used.
(F-1): Methyl silicate having the weight-average molecular weight of 530 (product name: MKC Silicate MS-51, manufactured by Mitsubishi Chemical Corporation)
(F-2): Methyl silicate having the weight-average molecular weight of 1,700 (product name: MKC Silicate MS-56S, manufactured by Mitsubishi Chemical Corporation)
(F-3): Tris-(trimethoxysilylpropyl)isocyanurate (product name: KBM-9659, manufactured by Shin-Etsu Chemical Co., Ltd.)
(F-4): Tetraethoxysilane (manufactured by Tokyo Chemical Industry Co., Ltd.: for comparison)

As the component (G), the following component was used.
(G): Zirconium acetylacetonate (product name: ZC-162, manufactured by Matsumoto Fine Chemical Co., Ltd.)

As the component (H), the following components were used.
(H): Organopolysiloxane powder resin having a three-dimensional network structure consist of (CH₃)₃SiO_{1/2} units, (CH₃)(CH₂=CH)SiO_{2/2} units, and SiO_{4/2} units, the resin which has the weight-average molecular weight of 5,500, Q unit content of 56 mol%, and alkenyl group content of 6.7 mol% relative to the total substituents to which silicon atoms are bonded.

As the reaction control agent, the following components were used.
(reaction control agent): 1-Ethynylcyclohexanol

### [Preparation Example 1]

60 parts by mass of base oil (A-1), 8 parts by mass of hexamethyldisilazane, 2 parts by mass of water, and 40 parts by mass of fine silica fine powder (C) were placed in a kneader and mixed for 1 hour at room temperature. Thereafter, the mixture was added with 8 parts by mass of hexamethyldisilazane, and further mixed for 1 hour at room temperature. Thereafter, the temperature was raised to 150°C, and the mixture was continuously mixed for 2 hours continuously. Thereafter, the mixture was added with 25 parts by mass of base oil (A-1) and 5 parts by mass of base oil (A-2) and mixed until homogeneous to obtain a base compound (1).

### [Example · Comparative Example]

The respective components at the blending ratio shown in Table 1 were mixed in a mixer at room temperature for 30 minutes to prepare addition-curable liquid silicone rubber compositions for an airbag.

Each composition was applied on a 6,6-nylon base fabric for an airbag (warp density of 46 threads/inch, weft density of 46 threads/inch) for coating with a knife coater so that the surface coating amount was 25 to 30 g/m², and then was subjected to thermal curing in a 200°C dryer for 1 minute to produce base fabric for an airbag (silicone rubber-coated nylon base fabric) coated with the silicone rubber cured product. The above silicone rubber-coated nylon base fabric was cut into a size of 50 mm wide × 300 mm long, and the slippage resistance was measured according to the method described in ASTM D6479-15:2020 (apparatus used: Autograph AGS-X; manufactured by Shimadzu Corporation). The median value of the results measured with N=5 is shown in Table 1.

**[Table 1]**

| | Component | Example 1 | Example 2 | Example 3 | Example 4 | Example 5 | Example 6 | Comparative Example 1 | Comparative Example 2 | Comparative Example 3 | Comparative Example 4 |
|---|---|---|---|---|---|---|---|---|---|---|---|
| Base compound (1) | A-1 | 29.3 | 34.8 | 34.8 | 34.8 | 34.8 | 34.8 | 29.3 | 34.8 | 34.8 | 34.8 |
| | A-2 | 1.7 | 2.1 | 2.1 | 2.1 | 2.1 | 2.1 | 1.7 | 2.1 | 2.1 | 2.1 |
| | C | 13.8 | 16.4 | 16.4 | 16.4 | 16.4 | 16.4 | 13.8 | 16.4 | 16.4 | 16.4 |
| Base oil | A-3 | 69.0 | 49.1 | 49.1 | 49.1 | 49.1 | 49.1 | 69.0 | 49.1 | 49.1 | 49.1 |
| | A-4 | | 14.0 | 14.0 | 14.0 | 14.0 | 14.0 | | 14.0 | 14.0 | 14.0 |
| Crosslinking agent | B-1 | 2.6 | 8.0 | 8.0 | 8.0 | 8.0 | 8.0 | 2.6 | 8.0 | 8.0 | 8.0 |
| | B-2 | 0.24 | 0.28 | 0.28 | 0.28 | 0.28 | 0.28 | 0.24 | 0.28 | 0.28 | 0.28 |
| Platinum catalyst | D | 0.25 | 0.30 | 0.30 | 0.30 | 0.30 | 0.30 | 0.25 | 0.30 | 0.30 | 0.30 |
| Curing control agent | 1-Ethynylcyclohexanol | 0.05 | 0.06 | 0.06 | 0.06 | 0.06 | 0.06 | 0.05 | 0.06 | 0.06 | 0.06 |
| Adhesion aid | E | 0.26 | 0.31 | 0.31 | 0.31 | 0.31 | 0.31 | 0.26 | 0.31 | 0.31 | 0.31 |
| Alkoxy group-containing organosilicon compound | F-1 | 0.24 | 0.14 | 0.28 | 5.6 | | | | | 0.06 | |
| | F-2 | | | | | 0.28 | | | | | |
| | F-3 | | | | | | 0.28 | | | | |
| | F-4 | | | | | | | | | | 0.28 |
| Adhesion promoter | G | | 0.17 | 0.17 | 0.17 | 0.17 | 0.17 | | 0.17 | 0.17 | 0.17 |
| Organopolysilox ane resin having a three-dimensional network structure | H | | 14.0 | 14.0 | 14.0 | 14.0 | 14.0 | | 14.0 | 14.0 | 14.0 |
| Hydrosilyl groups in total composition / Vinyl groups in total composition | | 5.1 | 5.1 | 5.1 | 5.1 | 5.1 | 5.1 | 5.1 | 5.1 | 5.1 | 5.1 |
| Viscosity of composition [Pa·s] | | 20 | 23 | 24 | 32 | 24 | 33 | 19 | 22 | 22 | 21 |
| Slippage resistance [N] | Warp direction | 289 | 304 | 324 | 314 | 334 | 301 | 223 | 242 | 252 | 245 |
| Slippage resistance [N] | Weft direction | 263 | 273 | 282 | 302 | 272 | 271 | 197 | 218 | 231 | 222 |

As can be seen from Table 1, Examples 1 to 6, which used the addition-curable liquid silicone rubber composition for an airbag of the present invention, had high slippage resistance values and were excellent in slippage resistance.

On the other hand, Comparative Examples 1 to 4, which did not use the addition-curable liquid silicone rubber composition for an airbag of the present invention, were inferior in slippage resistance to the Examples.

The present description includes the following embodiments.
[1]: An addition-curable liquid silicone rubber composition for an airbag comprising:
   (A) 100 parts by mass of an organopolysiloxane containing two or more alkenyl groups bonded to a silicon atom per molecule and having a polymerization degree of 50 to 2,000,
   (B) an organohydrogenpolysiloxane containing two or more hydrosilyl groups per molecule in such an amount that the hydrosilyl groups contained in the composition is 1 to 10 moles per 1 mole of the total alkenyl groups bonded to a silicon atom contained in the composition,
   (C) 1 to 30 parts by mass of a silica fine powder having a BET specific surface area of 50 m²/g or more,
   (D) a catalyst for hydrosilylation reaction, in an amount of 1 to 500 ppm, in terms of the mass of the catalyst metal element, relative to the blending mass of the component (A),
   (E) 0.1 to 10 parts by mass of an organosilicon compound containing one or more functional groups selected from the groups consisting of an epoxy group, an isocyanate group, and a (meth)acrylic group, and
   (F) 0.1 to 6.0 parts by mass of an organosilicon compound containing six or more alkoxy groups bonded directly to a silicon atom per molecule.
[2]: The addition-curable liquid silicone rubber composition for an airbag of the above [1], wherein the component (F) organosilicon compound containing six or more alkoxy groups bonded directly to a silicon atom per molecule is alkoxy silicate that is represented by the following average structure formula (1) and has a weight-average molecular weight of 200 to 8,000, 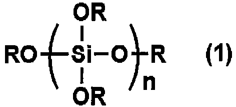 wherein, R independently represents a hydrogen, or a group selected from the group consisting of an alkyl group having 1 to 12 carbon atoms, an alkenyl group having 2 to 12 carbon atoms, and a monovalent aromatic hydrocarbon group having 6 to 12 carbon atoms, and "n" is an integer of 3 to 100.
[3]: The addition-curable liquid silicone rubber composition for an airbag of the above [1] or [2], wherein, further comprising, as a component (G), 0.05 to 5 parts by mass of at least one condensation catalyst selected from the group consisting of an organotitanium compound, an organozirconium compound, and an organoaluminum compound, relative to 100 parts by mass of the component (A).
[4]: The addition-curable liquid silicone rubber composition for an airbag of the above [1], [2], or [3], wherein, further comprising, as a component (H), 0.1 to 100 parts by mass of an organopolysiloxane powder resin having a three-dimensional network structure, relative to 100 parts by mass of the component (A).
[5]: An airbag having cured film of the addition-curable liquid silicone rubber composition for an airbag of the above [1], [2], [3], or [4], on base fabric for an airbag.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. An addition-curable liquid silicone rubber composition for an airbag comprising:
(A) 100 parts by mass of an organopolysiloxane containing two or more alkenyl groups bonded to a silicon atom per molecule and having a polymerization degree of 50 to 2,000,
(B) an organohydrogenpolysiloxane containing two or more hydrosilyl groups per molecule in such an amount that the hydrosilyl groups contained in the composition is 1 to 10 moles per 1 mole of the total alkenyl groups bonded to a silicon atom contained in the composition,
(C) 1 to 30 parts by mass of a silica fine powder having a BET specific surface area of 50 m²/g or more,
(D) a catalyst for hydrosilylation reaction, in an amount of 1 to 500 ppm, in terms of the mass of the catalyst metal element, relative to the blending mass of the component (A),
(E) 0.1 to 10 parts by mass of an organosilicon compound containing one or more functional groups selected from the groups consisting of an epoxy group, an isocyanate group, and a (meth)acrylic group, and
(F) 0.1 to 6.0 parts by mass of an organosilicon compound containing six or more alkoxy groups bonded directly to a silicon atom per molecule.

2. The addition-curable liquid silicone rubber composition for an airbag according to claim 1, wherein the component (F) organosilicon compound containing six or more alkoxy groups bonded directly to a silicon atom per molecule is alkoxy silicate that is represented by the following average structure formula (1) and has a weight-average molecular weight of 200 to 8,000, 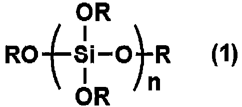 wherein, R independently represents a hydrogen, or a group selected from the group consisting of an alkyl group having 1 to 12 carbon atoms, an alkenyl group having 2 to 12 carbon atoms, and a monovalent aromatic hydrocarbon group having 6 to 12 carbon atoms, and "n" is an integer of 3 to 100.

3. The addition-curable liquid silicone rubber composition for an airbag according to claim 1, wherein, further comprising, as a component (G), 0.05 to 5 parts by mass of at least one condensation catalyst selected from the group consisting of an organotitanium compound, an organozirconium compound, and an organoaluminum compound, relative to 100 parts by mass of the component (A).

4. The addition-curable liquid silicone rubber composition for an airbag according to claim 2, wherein, further comprising, as a component (G), 0.05 to 5 parts by mass of at least one condensation catalyst selected from the group consisting of an organotitanium compound, an organozirconium compound, and an organoaluminum compound, relative to 100 parts by mass of the component (A) .

5. The addition-curable liquid silicone rubber composition for an airbag according to any one of claims 1 to 4, wherein, further comprising, as a component (H), 0.1 to 100 parts by mass of an organopolysiloxane powder resin having a three-dimensional network structure, relative to 100 parts by mass of the component (A).

6. An airbag having cured film of the addition-curable liquid silicone rubber composition for an airbag according to any one of claims 1 to 4, on base fabric for an airbag.

7. An airbag having cured film of the addition-curable liquid silicone rubber composition for an airbag according to claim 5, on base fabric for an airbag.
